# EUROPEAN PATENT APPLICATION

(11) **EP 1 906 073 A1**
(43) Date of publication of application: **02.04.2008**
(21) Application number: 06076781.1
(22) Date of filing: 26.09.2006
(51) Int. Cl.: F16L 21/04

(54) **Sealing organ for a tube**

(71) Applicant: Ludwig Frischhut GmbH & Co. KG, 84347 Pfarrkirchen (DE)
(72) Inventor: Wessels, Joseph Wilhelmus, 7331 BP Apeldoorn (NL)
(74) Representative: van Loon, C.J.J.

(57) **Abstract**

Sealing organ adapted to provide a seal around or in a tube, the sealing organ (1) comprising a ring of a plurality of ring elements (5; 105), wherein the ring elements (5; 105) are movable with respect to each other to adjust a diameter of the ring of elements (5; 105), wherein the ring elements (5; 105) are integrally provided with coupling parts (6, 7; 106, 107) to movably couple the elements to each other, wherein the ring elements are movable away from each other and towards each other in a substantially circumferential direction with respect of a circumference of the resulting ring of elements, for adjusting the ring diameter.

## Description

### BACKGROUND OF THE INVENTION

### 1. Field of the Invention

The invention relates to generally to a sealing organ, a ring element, to an assembly comprising a sealing organ and to the use of the sealing organ.

### 2. Description of Related Art

From European patent EP 0 794 378, a coupling device for a tube is known, the device comprising a sealing organ having a plurality of slidably abutting elements which form a closed ring. The ring can adapt to the tube to be sealed. The elements are wedge-shaped. As follows from this patent, in case lateral faces of the elements form an angle of 6°, 60 such elements are used to form the ring. If the angle is 5°, 72 elements are required to form the ring. In the known sealing organ, notches and projections are provided to hold to wedge-shaped elements in the slidably abutting relation.

During use of the known device, shifting of the slidably abutting elements leads to rotation of the elements, wherein the ring remains substantially closed. In this case, the rotation of the elements leads to a certain diameter variation of the sealing organ.

A disadvantage of the known device is, that elements having several forms (with several wedge angles, for example 6° to build a ring from 60 elements and 5° in case 72 elements are required, and for example a 4°, 3° or 2° wedge angle for use of 90, 120 or 180 elements respectively) have to be provided to provide sealing organs suitable to fit onto various tube diameter ranges. Therefore, several types of wedge-shaped elements have to be produced, leading to a significant increase of the overall costs of the various types of sealing organs.

### SUMMARY OF THE INVENTION

It is an object of embodiments of the present invention to improve the sealing organ.

According to an embodiment, there is provided a sealing organ adapted to provide a seal around or in a tube, the sealing organ comprising a ring of a plurality of ring elements, wherein the ring elements are movable with respect to each other to adjust a diameter of the ring of elements, wherein the ring elements are integrally provided with coupling parts to movably couple the elements to each other, wherein the sealing organ is characterised in that the ring elements are movable away from each other and towards each other in a substantially circumferential direction with respect of a circumference of the resulting ring of elements, for adjusting the ring diameter.

Also, in a further embodiment, there is provided a ring element designed to be used in a sealing organ according to the invention. For example, in yet a further embodiment, the ring element can have a substantially wedge-shaped main part and substantially parallelepiped radial inner and outer parts, when viewed in a transversal cross-section, the parallelepiped radial inner and outer parts being located off-line with respect to a radial centre line of the main part and reaching in circumferential direction from the main part, the radial inner and outer parts providing projections and recesses to link up the element to an adjacent element during assembly of the sealing organ.

There is also provided an assembly comprising a coupling device and a tube, the coupling device being provided with a sealing organ according to the invention, wherein the sealing organ is mounted onto or in the tube to provide a seal around or in the tube.

For example, during use, one or more extra ring elements can be simply inserted in the ring of elements to increase an initial/primary diameter of the adjustable sealing organ, the extra ring elements having the same configuration of the ring elements already present in the sealing organ. Also, one or more ring elements can be removed from the ring of elements to decrease the initial diameter of the adjustable sealing organ.

A basic idea of the present invention is, to provide a modular sealing organ, wherein ring elements can move with respect to each other to allow cooperation with different tubes having different tube diameters. Besides, identical ring elements can be added to a sealing organ, already provided with a plurality of the ring elements, to further expand the ring diameter for cooperation with a wider tube. Thus, the application of several types of ring elements can be avoided in a simple manner. The present invention provides a relatively inexpensive means to provide a seal in or around a tube, wherein a very large range of tube diameters can be accommodated.

Embodiments of the invention will now be described, by way of example only, with reference to the accompanying schematic drawings in which corresponding reference symbols indicate corresponding parts.

### BRIEF DESCRIPTION OF THE DRAWINGS

Figure 1 depicts a cross-section of an embodiment of an assembly comprising a sealing organ and a tube;
Figure 2 depicts a side view of an embodiment of a sealing organ, wherein the sealing organ is in a radially expanded state;
Figure 3 is similar to Fig. 2 and shows the sealing organ in a contracted state;
Figure 4 depicts a top view of the embodiment shown in Figures 2 and 3
Figure 5 is a side view of a ring element of the embodiment of Fig. 2;
Figure 6 is a top view of the ring element shown in Fig. 5;
Figure 7 is a front view of the ring element shown in Fig. 5;
Figure 8 is a bottom view of the ring element shown in Fig. 5;
Figure 9 is a detail of the ring element, in a side view opposite to the view of Fig. 5;
Figure 10 is a top view of an alternative embodiment of a ring element;
Figure 11 is a front view of the ring element shown in Fig. 10;
Figure 12 is a bottom view of the ring element shown in Fig. 10;
Figure 13 is a side view of the ring element of Fig. 10; and
Figure 14 is a back view of the ring element of Fig. 10.

### DETAILED DESCRIPTION OF EMBODIMENTS OF THE INVENTION

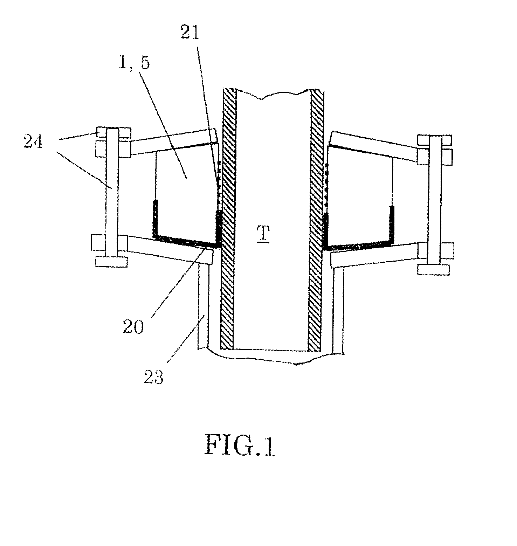

Figures 1-3 schematically depict an embodiment of an adjustable sealing organ, being provided with a ring of ring elements 5. For example, the sealing organ 1 can be used in substantially the same manner as is described in EP 0 794 378, as will be appreciated by the skilled person. For example, as is depicted in Fig. 1, the sealing organ 1 can provide a seal around (or alternatively in) a tube T. The sealing organ 1 can comprising grip enhancers 21 at a radial inner side of the ring of elements, for example friction increasing means, one or more grip rings, and/or other suitable grip means, to firmly hold the outer side of the tube T. Alternatively, for example, grip enhancers can be provided at a radial outer side of the ring of elements, in case the sealing organ is to be used to grip onto an inner side of a tube.

Also, the sealing organ 1 can be provided with a sealing material 20 extending around part of the ring of elements (in the present embodiment from a radial inner ring side via a lateral side towards a radial outer ring side of the sealing organ), for example a resilient material, a rubber ring or other suitable sealants, to engage the tube and, for example, a pressure applicator component 23.

In the present embodiment, pressure applicators 23, 24, 25 can be provided, to press the sealing organ 1 towards the tube T. In Fig. 1, pressure applicators include a first pressure applicator 23, a second pressure applicator 25 and a bolt/nut-assembly 24 to force the pressure applicators 23, 25 towards each other, leading to pressing the sealing organ 1 onto the tube T via respective contact surfaces between applicators 24, 25 and the sealing organ 1.

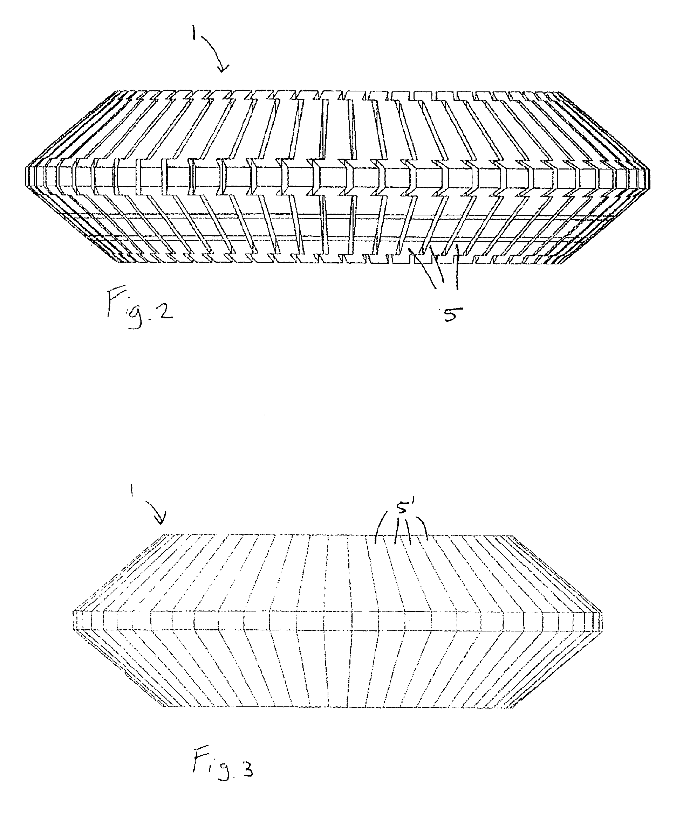

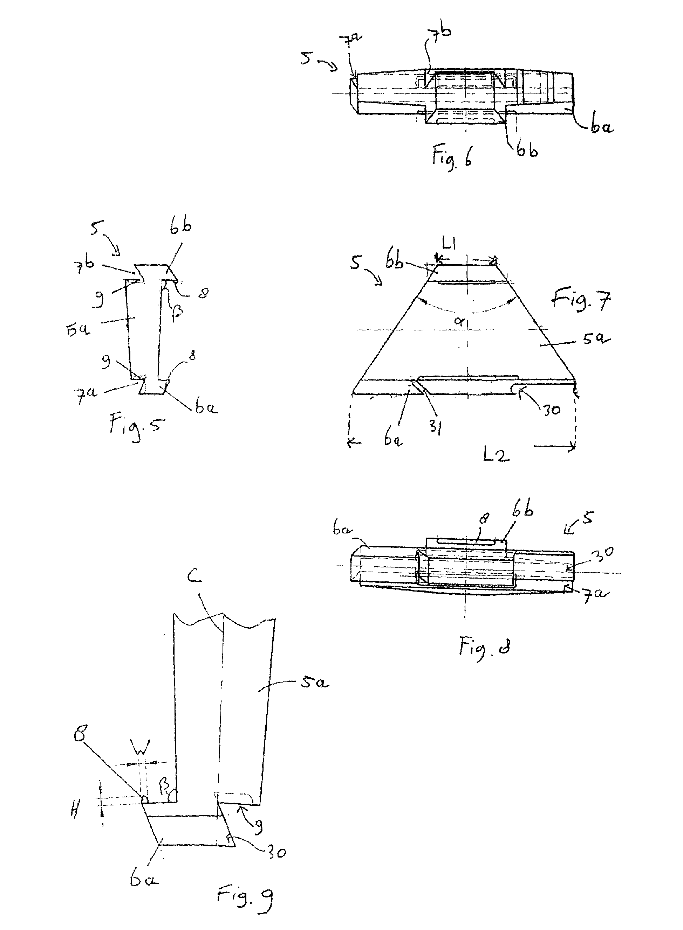

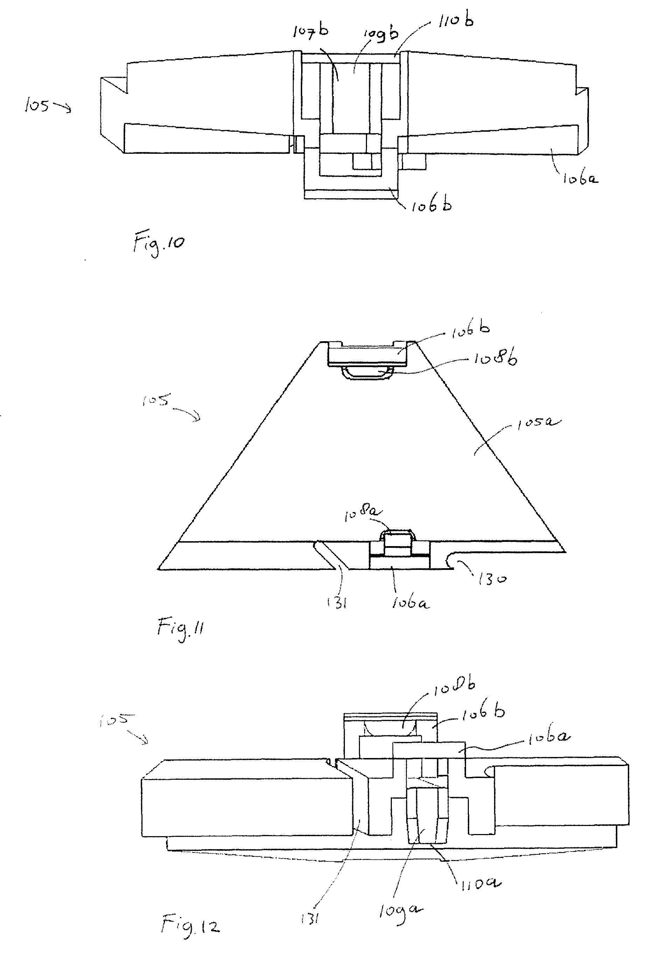

Figures 2-4 show an embodiment of the sealing organ 1. The present sealing organ 1 is adapted to provide a seal around a tube, and comprises a ring of a plurality of identical ring elements 5. Figures 5-9 show a first embodiment of a ring element 5 in more detail. An alternative embodiment of a ring element 105 is depicted in Figures 10-14.

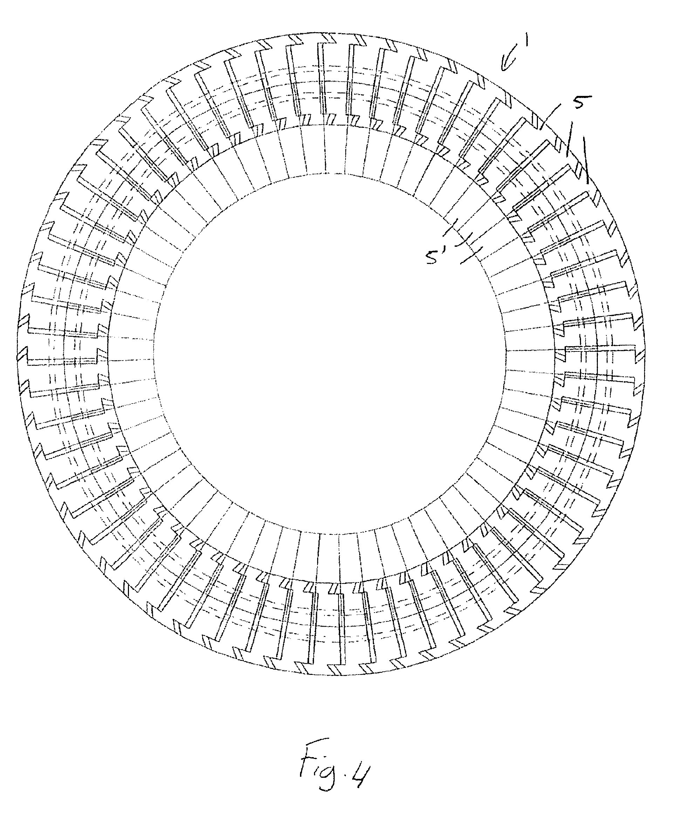

In the present sealing organ 1, the ring elements 5 are laterally movable, particularly slidable, with respect to each other to adjust a diameter of the ring of elements 5 (without changing the number of elements 5 present in the ring). Also, the ring elements 5 are movable away from each other and towards each other in a substantially circumferential direction with respect of a circumference of the resulting ring of elements, for adjusting the ring diameter (as is clearly visible in Fig. 4). In Figures 3 and 4, positions of ring elements in case of a contracted state of the sealing organ 1 (when the ring elements preferably do abut each other substantially to form a substantially closed ring) are schematically indicated at reference signs 5'. Also, herein, positions of the ring elements when the sealing organ is expanded with respect to the contracted state are indicated using reference signs 5.

In the present embodiment, the ring elements 5 still contact each other, when the elements 5 are in an circumferentially ring expanding position (see Fig. 2 and 4), via coupling parts, as will be explained below. However, in the ring expanding positions, relatively large gaps or slits are present between opposite surfaces of the ring elements 5. Thus, in the present embodiments, the ring elements 5 do not slidingly abut each other, and do not rotate during expansion and contraction of the ring (contrary to the device of EP 0 794 378).

In the present embodiment, the ring elements 5 are integrally provided with coupling parts 6, 7 to movably couple the elements to each other (see Figures 5-9). For example, integral coupling parts 6, 7, 8 can be configured to interlock the ring elements 5 to each other, in a detachable manner, for example by clicking or snapping the ring elements together.

Besides, radial inner sides of the ring elements 5 can be provided with a first slits apertures 30 (see Fig. 7) to receive a connecting part of mentioned sealing material 20. Besides, radial inner sides of the ring elements 5 can be provided with second slits apertures 31 to receive parts of mentioned grip enhancer 21.

Preferably, the ring elements 5 and their integral coupling parts 6, 7, 8 are made of rigid plastic, for example polycarbonate or reinforced resin. Thus, the ring elements 5 and coupling parts as such substantially do not elastically deform during normal use, when the sealing organ 1 is mounted on (or alternatively in) a tube, but remain their shape. Therefore, build-up of strain in the coupling parts can be prevented during normal use, leading to a high durability and a proper operation.

The coupling parts of the ring elements can be projections 6 and recesses 7 to link up the elements 5. After assembly of the sealing organ, projections 6 of each ring element 5 can reach into recesses of the adjacent ring element 5. The projections and recesses can be configured to allow the linked ring elements 5 to move or slide within a certain range, in the circumferential direction (laterally), with respect to each other. Particularly, such circumferential or lateral sliding of the elements 5 does not lead to substantial deformation of the elements 5, providing a durable sealing organ. For example, the ring elements 5 can move substantially freely in the circumferential direction within a certain range, or at least without substantial build-up of stress or strain in the projections 6 and recesses 7 during such movement. Thus, preferably, the adjusting of the diameter of the sealing organ is substantially not counteracted by any stresses between the ring elements 5, at least, in case the sliding of the ring elements 5 remains within the mentioned range.

For example, in a further embodiment, the sealing organ 1 can be configured to allow a maximum distance between opposite lateral sides of adjacent ring elements 5 in the range of about 1-4 mm, more particularly in the range of about 1-3 mm, without the ring elements being detached from each other. In that case, relatively large diameter variations can be obtained, particularly when the sealing organ 1 comprises a large number of ring elements, for example at least 50 ring elements 5.

In the present embodiment, a radial inner part of each ring element 5 comprises a first, radial inner, projection 6a and a first recess 7a. Besides, a radial outer part of each ring element 5 comprises a second, radial outer, projection 6b and a second recess 7b. The projections 6 are located laterally off-line with respect to a radial centre line C of the ring element (see Fig. 9), and extend for example substantially at one side of that centre line C, whereas a respective recess is located substantially at the opposite (lateral) side of the centre line C.

From Figures 5, 7, 9 it follows, that radial outer surfaces (faced away from a centre of the ring of elements after assembly) of the ring of elements 5 can be parallel with respect to radial inner surfaces (faced towards a centre of the ring of elements after assembly). Also, the radial outer surface of a ring element can be flat, without curvature. The same holds for the radial inner surface of the ring element 5. The mentioned projections 6a, 6b protrude in substantially lateral or circumferential directions from the respective ring element 5, opposite one another. The mentioned recesses 7a, 7b extend in substantially lateral or circumferential directions with respect to the respective ring element 5, and are faced away from one another. As follows from Fig. 5, the first projection 6a extend laterally (in the circumferential direction) adjacent the first recess 7a, and the second projection 6bis located laterally adjacent the second recess 7b.

As follows from the above, in the present embodiment, the ring elements can at least be movable to a first position, wherein the ring elements substantially abut each other (see Fig. 4: elements 5' abut each other), to form a closed ring, and to a second position wherein opposite lateral (radially extending) sides of adjacent ring elements are spaced-apart from each other (see Fig. 4, concerning elements 5).

For example, each ring element 5 has a dovetail shape, when viewed in a in plan view (see Fig. 7). For example, the vertex angle α of the ring element can be in the range of about 45°-90°, particularly in the range of about 60°-80°, for example about 70°. An axial length L1 of a radial outer side of the ring element 5 (indicated in Fig. 7) can be relatively small with respect to an axial length L2 of the radial inner side of the ring element; for example, L1<= 1/3 L2.

In the present embodiment, each ring element 5 can have a substantially wedge-shaped main part 5a (of a dovetail configuration, as is mentioned above and illustrated in Fig. 7), comprising the mentioned projections 6. As follows from Figures 4 and 5, after assembly, a radial centre line C of each wedge-shaped main part 5a extends in radial direction, towards the centre of the assembled ring. The projections can be provided by substantially parallelepiped radial inner and outer parts 6a, 6b (in case the element 5 is viewed in a transversal cross-section or in a plan view of the sealing ring, as in Fig. 4). For example, the parallelepiped radial inner and outer projections 6a, 6b can be located off-line, asymmetrically, with respect to the radial centre line C of the main part 5a and can reach in circumferential direction from the main part 5a. Also, from Fig. 5 and 9 it follows that lateral sides of these projections (faced away from each other) are substantially parallel with respect to each other, and slanted with respect to the centre line C of the main body 5a. Preferably, an angle β between each projection 6a, 6b and a lateral side of the main body 5a (the angle β being indicated in Figures 8 and 9) is about 90°.

The first and second projection 6a, 6b of each ring element 5 can cooperate with the first and second recesses 7a, 7b of an adjacent ring element 5 to link up the ring elements 5. Each projection 6a, 6b of a ring element 5 can be provided with a blocking element 8 protruding substantially radially with respect to the centre of the ring of elements, towards an opposite projection 6b, 6a. In the present embodiment, each blocking element 8 is an elongated narrow protrusion or cam, and extends in an axial direction with respect to a centre axis of an assembled ring 1 (see Fig. 8), transversally with respect to the respective ring element 5. The blocking element 8 is provided on the lateral tip of the respective projection 6 of the ring element 5. For example, in a non-limiting embodiment, a radial height H (see Fig. 9) of each blocking element 8 can be about 1 mm or smaller, for example about 0.5 mm, a lateral width W (see Fig. 9) of the blocking element 8 can be about 1 mm or smaller, for example about 0.5 mm, and a transversal length of a blocking element 8 (the length being perpendicular to the mentioned height and width) can be about 1 cm or larger. Also, a blocking element 8 can be dimensioned otherwise.

Each recess of a ring element 5 can be provided with a blocking groove 9 configured to cooperate with a blocking element 8 of an adjacent ring element 5, to limit circumferential movement of the ring elements to a predetermined range. For example, in a non-limiting embodiment, the radial depth of each blocking groove 9 larger than about 0.5 mm, for example about 1 mm, a lateral width of the blocking recess can be larger than 1 mm, for example in the range of 1-5 mm, and a transversal length of the recess 9 (the length being perpendicular to the mentioned depth and width) can be about 1 cm or larger. Again, a blocking groove 9 can also be dimensioned otherwise.

After assembly, the two blocking elements 8 of each ring element 5 reach into the blocking grooves or grooves 9 of the neighbouring ring element 5, to movably couple the ring elements to each other. Inner walls of the blocking grooved 9 can limit movement of the blocking elements 8 within the specified range, to prevent detachment of the ring elements 5 during normal operation. The coupling is such, that detachment of ring elements 5 is possible by forcing ring elements 5 from each other, using a certain decoupling force, such that blocking elements 8 can snap out of the respective blocking recesses 9. During such decoupling, a slight elastic deformation of respective ring element parts 6, 7, 8 can occur (for example a slight bending of the radial outer and inner parts 6).

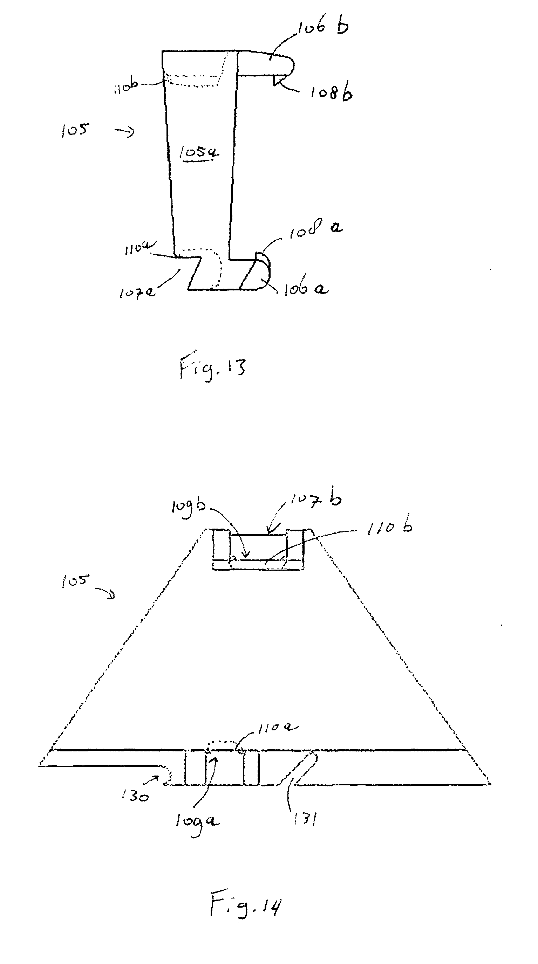

Figures 10-14 show an alternative embodiment of a ring element 105, a plurality of which can be coupled to each other to form an adjustable sealing organ 1, which is similar to the ring element embodiment 5 of Figures 5-9. The second ring element embodiment 105 also comprises a substantially wedge-shaped main part 105a, comprising the projections having radial inner and outer parts 106a, 106b, that can cooperate with first and second recesses 107a, 107b of an adjacent ring element 105 to link up the ring elements 105. Also, the projections 106a, 106b can comprise respective blocking elements 108a, 108b. From Fig. 13, it follows that one of the blocking elements 108a has a rounded lateral side faced away from the main part 105a, and the other blocking element 108b has a slanted lateral side faced away from the main part 105a. Blocking element sides that are faced towards the main part 105a are substantially parallel to the opposite side of the main part 105a. Also, in the embodiment of figures 10-14, a transversal length of a blocking element 108a, 108b can be about 1 cm or smaller, or the blocking elements 108a, 108b can be dimensioned otherwise. Each recess of a ring element 105 can be provided with a blocking groove 109a, 109b, respectively, configured to cooperate with a blocking element 108a, 108b, respectively, of an adjacent ring element 105, to limit circumferential movement of the ring elements to a predetermined range. As is indicated in Figures 10 and 12, for example, lateral ends of the blocking grooves 109a, 109b can be bordered by (radially) upstanding wall parts 110a, 110b, respectively, to stop the blocking elements 108a, 108b moving out of the blocking grooves 109a, 109b after assembly.

As follows from Fig. 10-14, in the present ring element embodiment, the bottom protrusion 106a and bottom aperture 107a are relatively small with respect to the width of the ring element 105, and extend asymmetrically/off-axis with respect to a middle plane of the ring element 105. Particularly, also, the bottom protrusion 106a is spaced-apart from the second slit aperture 131 (that is provided to receive part of a mentioned grip enhancer 21).

It has been found that the embodiment of Figures 10-14 is particularly durable, and suitable to form a sealing organ 1 out of a relatively small number of such ring elements 105. Also, the rounded and/or slanted sides of the blocking elements 108a, 108b can glide over the upstanding wall parts 110a, 110b to provide a smooth clicking-together of the ring elements 105.

The present modular sealing organ 1 can provide relatively large diameter variations, with relatively inexpensive means and in a durable, reliable manner. The sealing organ can provide a firm, reliable seal in or around a tube. The diameter of the sealing organ 1, having a predetermined number of ring elements 5, can be adjusted in a simple manner (for example over a relatively short first diameter range) by moving the elements 5 away from each other or towards each other. Also, the diameter of the adjustable sealing organ 1 can be changed significantly (particularly over a relatively large second diameter range, which can be larger than the mentioned first diameter range) to a desired value, simply by removing or adding ring elements 5.

Although the illustrative embodiments of the present invention have been described in greater detail with reference to the accompanying drawings, it will be understood that the invention is not limited to those embodiments. Various changes or modifications may be effected by one skilled in the art without departing from the scope or the spirit of the invention as defined in the claims.

It is to be understood that in the present application, the term "comprising" does not exclude other elements or steps. Also, each of the terms "a" and "an" does not exclude a plurality. Any reference sign(s) in the claims shall not be construed as limiting the scope of the claims.

## Claims

1. Sealing organ adapted to provide a seal around or in a tube, the sealing organ (1) comprising a ring of a plurality of ring elements (5; 105), wherein the ring elements (5; 105) are movable with respect to each other to adjust a diameter of the ring of elements (5; 105), wherein the ring elements (5) are integrally provided with coupling parts (6, 7; 106, 107) to movably couple the elements to each other, **characterised in that** the ring elements are movable away from each other and towards each other in a substantially circumferential direction with respect of a circumference of the resulting ring of elements, for adjusting the ring diameter.

2. Sealing organ according to claim 1, wherein each ring element (5; 105) is provided with projections (6; 106) and recesses (7; 107) to link up the elements (5; 105), wherein -after assembly- projections (6; 106) of each ring element (5; 105) reach into recesses of the adjacent ring element (5; 105), wherein the projections and recesses are configured to allow the linked ring elements (5; 105) to move within a certain range, in the circumferential direction, with respect to each other.

3. Sealing organ according to claim 2, wherein a radial inner part of each ring element comprises a first projection (6a; 106a) and a first recess (7a; 107a), wherein a radial outer part of each ring element comprises a second projection (6b; 106b) and a second recess (7b; 107b), wherein the first and second (6a, 6b; 106a, 106b) of each ring element (5; 105) cooperate with the first and second recesses (7a, 7b; 107a, 107b) of the adjacent ring element (5; 105) to link up the ring elements (5; 105).

4. Sealing organ according to claim 2 or 3, wherein each projection (6; 106) of a ring element (5; 105) is provided with a blocking element (8; 108a, 108b) protruding in a substantially radial direction with respect to the ring of elements, wherein each recess of a ring element is provided with a blocking groove (9; 109a, 109b) configured to cooperate with a blocking element of an adjacent ring element (5; 105), to limit circumferential movement of the ring elements to a predetermined range.

5. Sealing organ according to any of the preceding claims, wherein that the ring elements are at least movable to a first position, wherein the ring elements substantially abut each other, and to a second position wherein opposite lateral sides of adjacent ring elements are spaced-apart from each other.

6. Sealing organ according to any of the preceding claims, wherein the sealing organ is configured to allow a maximum distance between opposite lateral sides of adjacent ring elements in the range of about 1-4 mm, without the ring elements being detached from each other.

7. Sealing organ according to any of the preceding claims, wherein each ring element (5; 105) has a substantially wedge-shaped main part (5a; 105a) and substantially parallelepiped radial inner and outer parts (5b, 5c), when viewed in a transversal cross-section, the parallelepiped radial inner and outer parts (5b, 5c) being located off-line with respect to a radial centre line of the main part (5a; 105a) and reaching in circumferential direction from the main part (5a; 105a).

8. Sealing organ according to any of the preceding claims, wherein the ring elements (5; 105) and their integral coupling parts (6, 7, 8; 106, 107, 108a, 108b) are made of rigid plastic.

9. Sealing organ according to any of the preceding claims, wherein integral coupling parts (6, 7, 8; 106, 107, 108a, 108b) are configured to interlock the ring elements to each other, in a detachable manner.

10. Sealing organ according to any of the preceding claims, comprising grip enhancers at a radial inner side of the ring of elements, and comprising a sealing material extending around the ring of elements, or vice-versa.

11. Ring element (5; 105) designed to be used in a sealing organ according to any of the preceding claims, the ring element having a substantially wedge-shaped main part (5a; 105a) and substantially parallelepiped radial inner and outer parts (5b, 5c), when viewed in a transversal cross-section, the parallelepiped radial inner and outer parts (5b, 5c) being located off-line with respect to a radial centre line of the main part (5a) and reaching in circumferential direction from the main part (5a; 105a), the radial inner and outer parts providing projections (6; 106) and recesses (7; 107) to link up the element (5; 105) to an adjacent element during assembly of the sealing organ

12. Assembly comprising a coupling device and a tube, the coupling device being provided with a sealing organ according to any of claims 1-10, wherein the sealing organ is mounted onto or in the tube to provide a seal around or in the tube.

13. Use of a coupling device according to any of claims 1-10, wherein one or more extra ring elements are being inserted in the ring of elements to increase the diameter of the sealing organ, the extra ring elements having the same configuration of the ring elements already present in the sealing organ, wherein one or more ring elements are being removed from the ring of elements to decrease the diameter of the sealing organ.
